# FASCICULE DE BREVET EUROPEEN

(11) **EP 3 877 239 B1**
(45) Date de publication et mention de la délivrance du brevet: **17.04.2024**
(21) Numéro de dépôt: 19795578.4
(22) Date de dépôt: 05.11.2019
(51) Int. Cl.: B62D 25/02, B62D 25/04, B62D 25/06, B62D 27/02

(54) **AGENCEMENT AVEC UNE STRUCTURE LATÉRALE DE VÉHICULE ET PROCÉDÉ DE RÉALISATION D'UN TEL AGENCEMENT**
ANORDNUNG MIT EINER SEITENSTRUKTUR EINES FAHRZEUGS UND VERFAHREN ZUR HERSTELLUNG EINER SOLCHEN ANORDNUNG
ASSEMBLY WITH A VEHICLE SIDE STRUCTURE AND METHOD OF MAKING SUCH AN ASSEMBLY

(30) Priorité: 06.11.2018 FR 1860186
(43) Date de publication de la demande: 15.09.2021
(73) Titulaire: Renault s.a.s, 92100 Boulogne Billancourt (FR)
(72) Inventeur: CABRAL, Guillaume, 77170 Brie Comte Robert (FR); PIC, Aurélien, 91190 Gif sur Yvette (FR)
(74) Mandataire: Renault Group
(86) Numéro de dépôt international: PCT/EP2019/080157
(87) Numéro de publication internationale: WO 2020/094597

(56) Documents cités:
- EP-A1- 2 752 358
- EP-A1- 3 009 333
- FR-A1- 2 887 843
- JP-A- 2015 067 159
- US-A1- 2018 237 074

## Description

L'invention concerne une doublure de montant de baie d'une caisse de véhicule. L'invention concerne aussi un agencement comprenant une telle doublure de montant de baie. L'invention concerne encore un véhicule comprenant une telle doublure de montant de baie et/ou un tel agencement. L'invention concerne encore un procédé d'obtention d'une structure latérale d'une caisse de véhicule. L'invention concerne enfin un procédé d'obtention d'un tel agencement.

Un véhicule, en particulier un véhicule automobile, comprend généralement une caisse. Une telle caisse comprend généralement une structure latérale côté gauche et une structure latérale côté droit. De telles structures latérales comprennent généralement chacune une doublure de montant de baie, c'est-à-dire une paroi s'étendant sur le côté d'un pare-brise et pouvant aller au-delà du pare-brise vers l'arrière selon la direction longitudinale. De telles doublures de montant de baie comprennent généralement un renfort ou brancard. En outre, une structure latérale comprend généralement un pied milieu agencé sensiblement verticalement derrière une ouverture de porte avant.

Des traverses s'étendent alors généralement transversalement au niveau d'un toit ou pavillon entre la structure latérale côté gauche et la structure latérale côté droit. De telles traverses sont généralement fixées aux brancards sur les doublures de montant de baie ou de pied milieu.

De tels assemblages entre les traverses et les doublures de montant de baie ou de pied milieu présentent des inconvénients. D'une part ces assemblages sont complexes à réaliser et d'autre part il en résulte un mauvais engagement des matières.

Le document EP 2 752 358 A1 montre les caractéristiques du préambule de la revendication 1.

Le but de l'invention est de fournir un agencement d'une caisse remédiant aux inconvénients ci-dessus et améliorant les agencements de l'état de la technique. En particulier, l'invention propose un agencement simple, peu onéreux et compatible avec différentes versions d'un véhicule.

Pour atteindre cet objectif, l'invention porte sur un agencement comprenant une structure latérale de véhicule, notamment de véhicule automobile, une traverse de pavillon avant et une traverse de pavillon centrale, la traverse de pavillon avant et la traverse de pavillon centrale s'étendant transversalement ou sensiblement transversalement, la structure latérale comprenant une doublure de pied milieu et une doublure de montant de baie d'une caisse de véhicule, l'agencement comprenant une première équerre fixée sur la doublure de montant de baie et sur la traverse de pavillon avant, la doublure de montant de baie s'étendant au-delà d'un pied milieu vers l'arrière d'une telle caisse selon la direction longitudinale ou sensiblement longitudinale.

L'agencement peut comprendre une deuxième équerre fixée sur la traverse de pavillon centrale et sur la doublure de montant de baie et sur la doublure de pied milieu.

La structure latérale comprend une doublure de brancard arrière, notamment fixée au niveau d'une extrémité arrière de la doublure de montant de baie.

L'agencement comprend une doublure de brancard arrière, notamment fixée au niveau d'une extrémité arrière de la doublure de montant de baie, et une quatrième équerre fixée sur la doublure de brancard arrière et sur la traverse de pavillon centrale.

L'agencement peut comprendre une troisième équerre fixée sur la doublure de pied milieu et sur la doublure de montant de baie, la troisième équerre pouvant être destinée à participer à la fixation d'un toit en verre et/ou d'un toit ouvrant.

L'agencement peut comprendre un support destiné à participer à la fixation d'un toit en verre et/ou d'un toit ouvrant, notamment un support intégrant une piste d'encollage.

L'agencement peut comprendre un pontet de poignée arrière, notamment fixé sur la doublure de brancard arrière par au moins un rivet et/ou soudage.

L'agencement peut comprendre un pontet de poignée avant, notamment fixé sur la doublure de montant de baie par au moins un rivet et/ou soudage.

L'invention porte encore sur un véhicule, notamment un véhicule automobile, comprenant au moins un agencement tel que défini précédemment.

L'invention porte encore sur un procédé de réalisation d'un agencement tel que défini précédemment, comprenant une troisième équerre fixée sur la doublure de pied milieu et sur la doublure de montant de baie, la troisième équerre étant destinée à participer à la fixation d'un toit en verre et/ou d'un toit ouvrant, le procédé comprenant une étape de
fourniture d'une première équerre côté droit, respectivement côté gauche, d'une doublure de brancard arrière côté droit, respectivement côté gauche, et d'une doublure de montant de baie côté droit, respectivement côté gauche,
suivie d'une étape de fixation de la première équerre et de la doublure de brancard arrière sur la doublure de montant de baie, notamment par soudage, et,
en cas de présence d'une direction d'un tel véhicule côté gauche, respectivement côté droit, alors le procédé comprend une étape de fourniture d'un pontet de poignée avant côté droit, respectivement côté gauche, suivie d'une étape de fixation du pontet de poignée avant sur la doublure de montant de baie côté droit, respectivement côté gauche, notamment par au moins un rivet et/ou soudage.

L'invention porte encore sur un procédé selon les revendications 8 ou 9. En cas de caisse destinée à recevoir un toit tôlé, alors le procédé peut comprendre une étape de fourniture d'une deuxième équerre côté droit, respectivement côté gauche, et d'un pontet de poignée arrière côté droit, respectivement côté gauche,
suivie d'une étape de fixation de la deuxième équerre sur la doublure de montant de baie côté droit, respectivement côté gauche, notamment par au moins un rivet et/ou soudage,
et d'une étape de fixation du pontet de poignée arrière sur la doublure de montant de baie côté droit, respectivement côté gauche, et sur la doublure de brancard arrière côté droit, respectivement côté gauche, notamment par au moins un rivet et/ou soudage.

En cas de caisse destinée à recevoir un toit vitré et/ou ouvrant, alors le procédé peut comprendre une étape de fourniture d'une troisième équerre côté droit, respectivement côté gauche, et d'une quatrième équerre côté droit, respectivement côté gauche,
suivie d'une étape de fixation de la troisième équerre sur la doublure de montant de baie, notamment par au moins un rivet et/ou soudage, et d'une étape de fixation de la quatrième équerre sur la doublure de brancard arrière, notamment par au moins un rivet et/ou soudage.

Le procédé peut comprendre une étape de fourniture d'une doublure de pied milieu côté droit, respectivement côté gauche,
suivie d'une étape de fixation de la deuxième équerre côté droit, respectivement côté gauche, sur la doublure de pied milieu, notamment par soudage de plusieurs épaisseurs.

Le procédé peut comprendre une étape de fourniture d'une doublure de pied milieu côté droit, respectivement côté gauche, suivie d'une étape de fixation de la troisième équerre côté droit, respectivement côté gauche, sur la doublure de pied milieu, notamment par soudage de plusieurs épaisseurs.

Le procédé peut comprendre une étape de fourniture d'un anneau de renforts côté droit, respectivement côté gauche, notamment d'un anneau de renforts comprenant un renfort de pied avant côté droit, respectivement côté gauche, et/ou un renfort de brancard avant côté droit, respectivement côté gauche, et/ou un renfort de pied milieu côté droit, respectivement côté gauche, et/ou un renfort de bavolet côté droit, respectivement côté gauche, suivie d'une étape de fixation de cet anneau de renforts à la structure latérale côté droit, respectivement côté gauche, notamment par soudage.

Le procédé peut comprendre une étape de fourniture d'une peau de côté de caisse côté droit, respectivement côté gauche, suivie d'une étape de fixation de cette peau de côté de caisse à la structure latérale côté droit, respectivement côté gauche, notamment par soudage.

Le procédé peut comprendre une étape de fourniture d'un support côté droit, respectivement côté gauche, destiné à participer à la fixation d'un toit en verre et/ou ouvrant, notamment un support intégrant une piste d'encollage, suivie d'une étape de fixation du support sur la structure latérale côté droit, respectivement côté gauche, notamment par au moins un rivet et/ou soudage.

Le procédé peut comprendre une étape de fourniture d'une traverse de pavillon avant et d'une traverse de pavillon centrale, suivie d'une étape de fixation de la traverse de pavillon avant sur la structure latérale, notamment posée sur la première équerre puis soudée, et d'une étape de fixation de la traverse de pavillon centrale sur la structure latérale, notamment posée sur la deuxième équerre ou sur la quatrième équerre puis soudée.

Le procédé peut comprendre une étape de fourniture d'un élément de fermeture de traverse de pavillon avant suivie d'une étape de fixation de cet élément de fermeture sur la traverse de pavillon avant.

Les figures annexées représentent, à titre d'exemple, un mode de réalisation d'un véhicule.

La figure 1 est une vue schématique de côté d'un véhicule automobile selon un mode de réalisation de l'invention.

La figure 2 est une vue en perspective partielle d'une caisse d'un véhicule, depuis l'intérieur, selon un mode de réalisation de l'invention.

La figure 3 est une vue en coupe partielle selon un plan vertical et transversal d'un agencement selon un mode de réalisation de l'invention.

La figure 4 est une vue en perspective partielle d'une caisse d'un véhicule, depuis l'intérieur, selon une variante du mode de réalisation de l'invention.

Les figures 5, 6, 7 et 8 sont des vues en coupe partielle selon des plans verticaux et transversaux de l'agencement selon la variante du mode de réalisation.

Les figures 9 et 10 sont des vues en coupe partielle selon des plans verticaux et longitudinaux de l'agencement selon la variante du mode de réalisation de l'invention.

La direction selon laquelle le véhicule se déplace en ligne droite est définie comme étant la direction longitudinale X. Par convention, la direction perpendiculaire à la direction longitudinale X, située dans un plan parallèle au sol, est nommée direction transversale Y. La troisième direction, perpendiculaire aux deux autres, est nommée direction verticale Z.

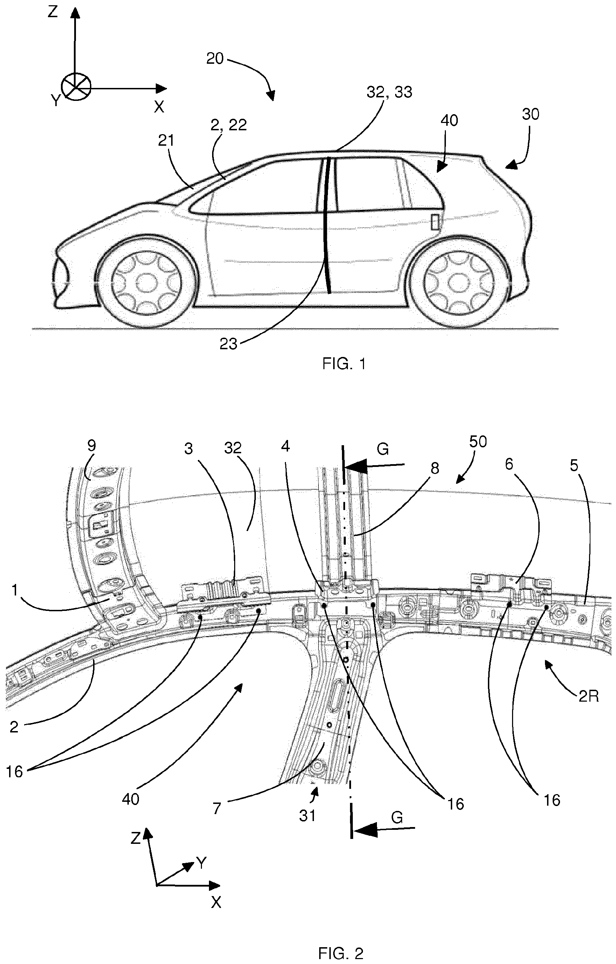

La figure 1 illustre un véhicule selon un mode de réalisation, en particulier un véhicule automobile 20. Le véhicule automobile 20 comprend une caisse 30. La caisse 30 comprend une structure latérale côté gauche et une structure latérale côté droit. La structure latérale 40 côté droit, respectivement côté gauche, comprend une doublure de montant de baie 2 côté droit, respectivement côté gauche. Chaque doublure de montant de baie est généralement recouverte d'un montant de baie 22 correspondant. De manière générale, chaque doublure de montant de baie s'étend de chaque côté d'un pare-brise 21 ainsi que vers l'arrière de la caisse 30. La structure latérale 40 côté droit, respectivement côté gauche, comprend encore une doublure de pied milieu 7 côté droit, respectivement côté gauche. La structure latérale 40 côté droit, respectivement côté gauche, comprend encore une doublure de brancard arrière 5 côté droit, respectivement côté gauche.

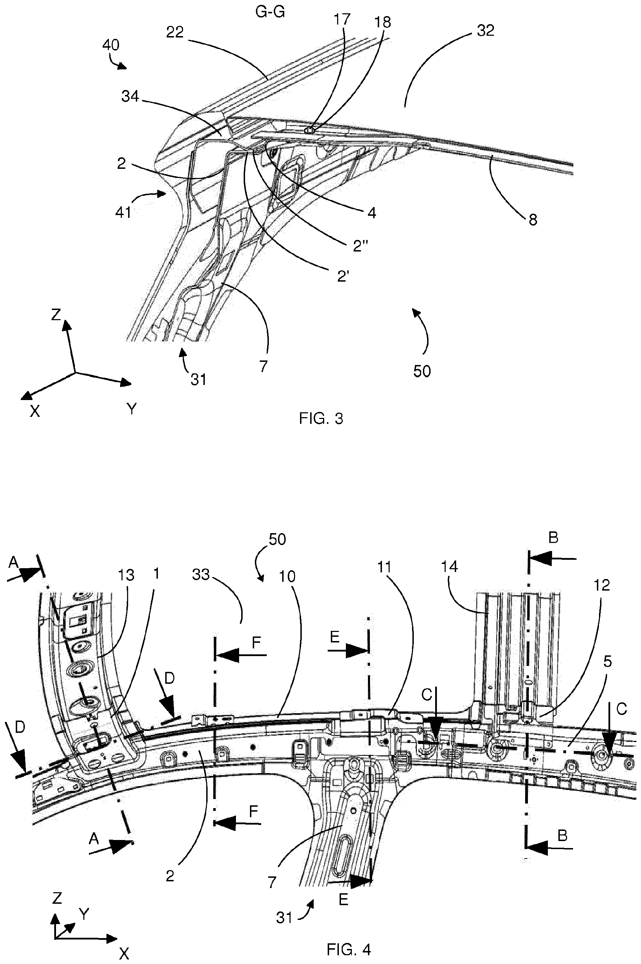

Comme illustré en particulier sur les figures 2 et 4, la doublure de montant de baie 2 s'étend au-delà d'un pied milieu 31 selon la direction longitudinale ou sensiblement longitudinale vers l'arrière de la caisse 30.

Le véhicule automobile 20 comprend encore un agencement 50. L'agencement 50 comprend la structure latérale 40, une traverse de pavillon avant 9 et une traverse de pavillon centrale 8. La traverse de pavillon avant 9 s'étend transversalement ou sensiblement transversalement. La traverse de pavillon centrale 8 s'étend également transversalement ou sensiblement transversalement.

Comme illustré sur la figure 2, l'agencement 50 comprend une première équerre 1. La première équerre 1 est fixée sur la doublure de montant de baie 2 et sur la traverse de pavillon avant 9. Cet agencement correspond de préférence au cas de véhicule automobile 20 équipé d'un toit ou pavillon dit « normal », c'est-à-dire tôlé 32. Un tel toit est de préférence dépourvu de partie vitrée ou en verre et comprend de préférence de la tôle. L'agencement 50 comprend encore une deuxième équerre 4. La deuxième équerre 4 est fixée sur la traverse de pavillon centrale 8 et sur la doublure de montant de baie 2 et sur la doublure de pied milieu 7. La structure latérale 40 comprend encore une doublure de brancard arrière 5. De préférence, la doublure de brancard arrière 5 est fixée au niveau d'une extrémité arrière 2R de la doublure de montant de baie 2. Avantageusement, l'agencement 50 comprend un pontet 6 de poignée arrière. Le pontet 6 permet la fixation d'une poignée permettant à un passager arrière de se tenir, par exemple en cas de virage, à proximité du pavillon, par exemple au-dessus d'une vitre arrière ou d'un cadre de porte arrière. Le pontet 6 de poignée arrière est alors fixé sur la doublure de brancard arrière 5 par exemple par le biais d'au moins un rivet et/ou soudage. Avantageusement, le pontet 6 est pré-positionné grâce à deux rivets avant d'être soudé.

En cas de véhicule automobile 20 doté d'une direction à gauche, et par conséquent d'un moyen de direction tel qu'un volant, disposé à gauche au sein de l'habitacle avant par exemple, l'agencement 50 comprend un pontet 3 de poignée avant à droite. Le pontet 3 permet la fixation d'une poignée permettant à un passager avant de se tenir, par exemple en cas de virage, à proximité du pavillon, par exemple au-dessus du cadre de la porte avant passager. Le pontet 3 de poignée avant est disposé sur la doublure de montant de baie 2 côté droit. Le pontet 3 de poignée avant est alors fixé par le biais d'au moins un rivet et/ou soudage. Avantageusement le pontet 3 est pré-positionné grâce à deux rivets avant d'être soudé.

Comme illustré sur la figure 4, selon une variante, l'agencement 50 comprend la structure latérale 40, une traverse de pavillon avant 13 et une traverse de pavillon centrale 14. Cette variante correspond de préférence à un véhicule automobile 20 équipé d'un toit en verre ou vitré et/ou ouvrant 33. La traverse de pavillon avant 13, tout comme la traverse de pavillon centrale 14 s'étendent transversalement ou sensiblement transversalement. Comme évoqué précédemment la structure latérale 40 comprend la doublure de pied milieu 7, la doublure de brancard arrière 5 et la doublure de montant de baie 2. Dans cette variante, l'agencement 50 comprend également la première équerre 1. La première équerre 1 est fixée sur la doublure de montant de baie 2 et sur la traverse de pavillon avant 13. L'agencement 50 comprend encore une quatrième équerre 12. La quatrième équerre 12 est fixée sur la doublure de brancard arrière 5 et sur la traverse de pavillon centrale 14. De préférence, l'agencement 50 comprend encore une troisième équerre 11. La troisième équerre 11 est fixée sur la doublure de pied milieu 7 et sur la doublure de montant de baie 2. La troisième équerre 11 est ainsi destinée à participer à la fixation du toit en verre et/ou ouvrant 33. Avantageusement, dans cette variante, l'agencement 50 comprend encore un support 10. Le support 10 est destiné à participer à la fixation du toit en verre et/ou ouvrant 33. Pour la fixation du support ou élément latéral 10, il convient de prévoir une mise en opération pour le côté de caisse avec activation de deux poinçons par exemple pour avoir deux trous par exemple permettant de pré-positionner cet élément 10 par rivetage avant assemblage par soudure par points par exemple. A noter que le support 10 ou élément latéral peut être mis en place sans conséquence sur la version avec toit tôlé 32.

De préférence, le pontet 3 peut être agencé aussi bien avec un toit en tôle 32 qu'un toit en verre et/ou ouvrant 33.

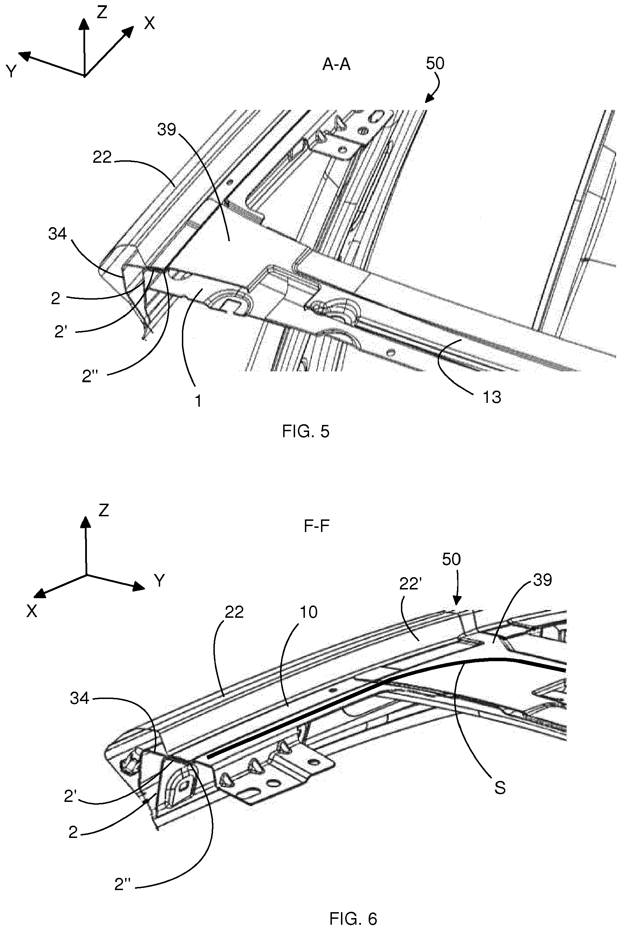

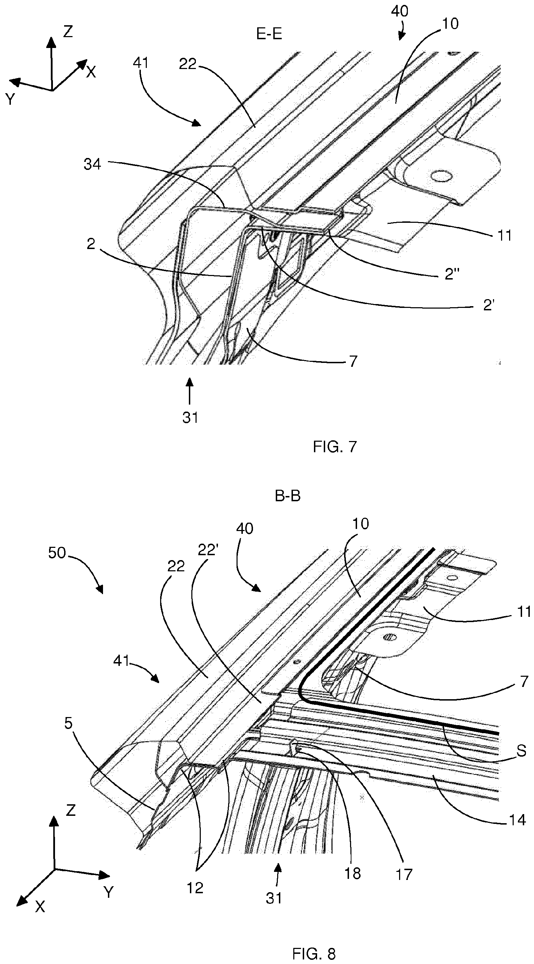

Avantageusement, comme illustré sur les figures 6, 7 et 8, le support 10 est agencé sur un rebord 22' du montant de baie 22. De préférence, le support 10 ou élément latéral de liaison du toit en verre fixe ou ouvrant 33, intègre la fonction piste d'encollage. Ainsi une piste d'encollage, c'est-à-dire une surface destinée à recevoir de la colle, par exemple un cordon de colle S, concourant à maintenir la partie vitrée du toit par exemple sur le support 10, est prévue. La piste d'encollage peut être utilisée à la fixation d'un vitrage de toit en verre fixe ou à la fixation d'une partie fixe latérale et avant d'un toit ouvrant. Comme illustré sur la figure 8, la piste d'encollage s'étend au niveau de la troisième équerre 11 sur le support 10, et ce, jusque sur la traverse de pavillon centrale 14. Ainsi, la piste d'encollage peut être utilisée à la fixation d'un vitrage de toit en verre fixe ou à la fixation d'une partie fixe latérale et arrière d'un toit ouvrant. A noter que, comme illustré sur les figures 5 et 6, un élément de fermeture traverse 39 est alors prévu, disposé d'une part sur la première équerre 1 et d'autre part sur le support 10. L'élément de fermeture traverse 39, tout comme le support 10, vient sur le rebord 22' du montant de baie 22. A noter que la première équerre 1 est conçue géométriquement pour accepter la surépaisseur de l'élément fermeture traverse 39. Toutefois, même en cas de toit « normal » ou tôlé 32, la première équerre 1 est également adaptée.

Ainsi la faisabilité d'assemblage, tout comme l'engagement des matières, en particulier au niveau de la doublure de montant de baie 2 et de la doublure de brancard arrière 5 sont améliorés.

En effet, comme illustré sur les figures 2 et 3, la première équerre 1 et la deuxième équerre 4 constituent des interfaces facilitant l'assemblage de la traverse de pavillon avant 9 et de la traverse de pavillon centrale 8 avec la doublure de montant de baie 2 dans le cas du toit tôlé 32.

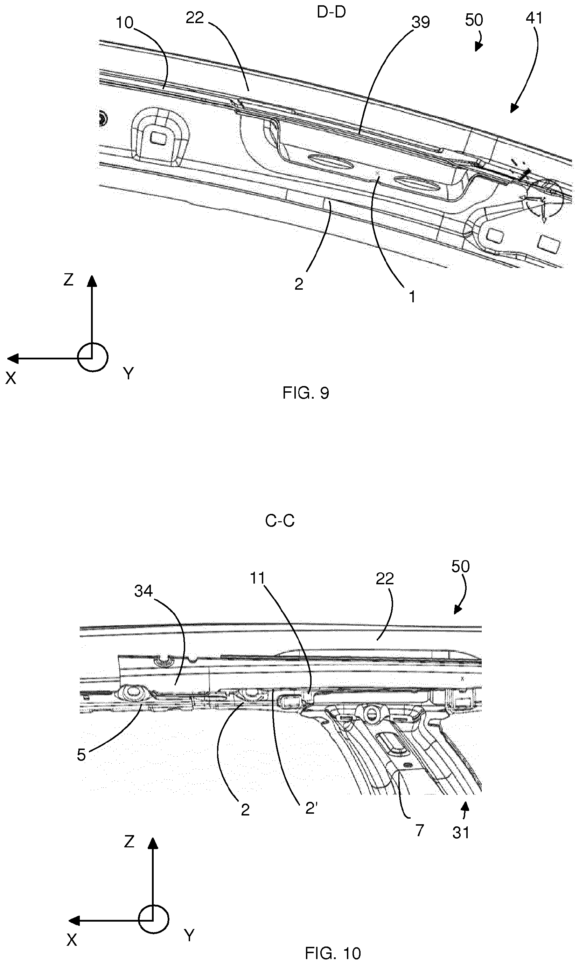

A noter, que l'agencement 50 comprend encore un anneau de renforts 34. Cet anneau de renforts 34 comprend par exemple un renfort de pied avant et/ou un renfort de brancard avant et/ou un renfort de pied milieu et/ou un renfort de bavolet. Comme illustré sur les figures 3, 5, 6, 7 et 10, l'anneau de renforts 34 est agencé, disposé, sur le dessus d'un bord latéral intérieur 2' de la doublure de montant de baie 2. L'anneau de renfort 34 est également fixé à la doublure de brancard 5, notamment au niveau de sa partie verticale d'extrémité. Préférentiellement, le bord inférieur de l'anneau de renfort 34 s'étend dans un plan sensiblement identique à celui de la doublure de brancard 5 de telle sorte qu'il est disposé en appui contre une face intérieure de la doublure de brancard, comme cela est illustré sur la figure 8.

Comme illustré sur les figures 4 à 8, dans le cas d'un toit en verre fixe et/ou ouvrant 33, la première équerre 1 constitue une interface facilitant l'assemblage de la traverse de pavillon avant 13 avec la doublure de montant de baie 2. La quatrième équerre 12 constitue une interface facilitant l'assemblage de la traverse de pavillon centrale 14 avec la doublure de brancard arrière 5. La troisième équerre 11 constitue une interface facilitant par exemple l'assemblage du toit 33 avec la doublure de montant de baie 2 et participant au maintien de l'élément 10.

A noter que la doublure de brancard arrière 5 comprend une interface de fixation destinée à recevoir soit le pontet 6 de fixation d'une poignée de maintien pour un passager arrière en version toit tôlé 32, soit la quatrième équerre 12 de fixation de la traverse de pavillon centrale 14 en version toit en verre fixe ou toit ouvrant. Alternativement, la doublure de brancard arrière 5 peut par exemple recevoir le pontet 6 et la quatrième équerre 12 en version toit en verre fixe ou ouvrant.

Grâce aux moyens de fixation que constituent les première, deuxième, troisième et quatrième équerres de liaison ou de fixation, la doublure de montant de baie 2 est dotée d'une forme plus régulière, comportant peu voire pas d'excroissance. Autrement dit, ses carres ou bords 2", illustrés sur les figures 3, 5, 6 et 7, ne sont pas impactés par des accidents géométriques, c'est-à-dire qu'il n'y a pas ou très peu de changements de formes. Une telle régularité améliore les performances, notamment la stabilité et le comportement en cas de choc, en particulier en cas de choc frontal. En outre, la régularité de la doublure de montant de baie 2 facilite l'étape d'obtention de la doublure de montant de baie par emboutissage. Enfin, la conformité géométrique, autrement dit la tenue des cibles géométriques de la doublure de montant de baie est atteinte aisément.

De plus la doublure de montant de baie 2 est de grande longueur selon la direction longitudinale. En effet, la doublure de montant de baie 2 s'étend, vers l'arrière du véhicule, au-delà d'un pied milieu 23. Cela concourt à assurer une continuité structurelle sur la ligne de montant de baie et à réduire la présence d'accident de forme pouvant conduire à des instabilités, tels que des flambements locaux, lors du chargement en choc frontal. En outre, le rapport entre la masse de matière nécessaire à la production et la masse de matière réellement utilisée dans la doublure de montant de baie finale est optimale.

Ainsi, la première équerre 1, la doublure de montant de baie 2, la doublure de brancard arrière 5 et la doublure de pied milieu 7 sont identiques quel que soit le type de pavillon, à savoir en verre fixe et/ou ouvrant 33 ou tôlé 32. Autrement dit la diversité des pièces s'en trouve réduite, les deuxième, troisième et quatrième équerres 4, 11, 12 rapportées étant traitées de manière globale de façon à ne gérer qu'une seule référence de doublure de montant de baie 2, de doublure de brancard arrière 5, de doublure de pied milieu 7 et de première équerre 1 de liaison de traverse de pavillon avant 9, 13. Evidemment, les empilages et mises en place de zones d'accostages sont traités en conséquence. Cette standardisation génère des économies conséquentes, en particulier en termes d'espace de stockage concernant les doublures de montant de baie 2 encombrantes, désormais standards. Effectivement, pour un même modèle de véhicule, il suffit de produire des doublures de montant de baie droites et des doublures de montant de baie gauches, et ce, quel que soit son type de toit et quel que soit le côté de sa direction.

En résumé, en cas de toit tôlé 32, on a recours à la deuxième équerre 4. En cas de toit vitré 33, on n'utilise pas de deuxième équerre 4 mais une troisième équerre 11 et une quatrième équerre 12.

Un mode d'exécution d'un procédé d'obtention de la structure latérale 40 côté droit de la caisse 30 du véhicule automobile 20 est décrit ci-après.

Le procédé comprend une étape de fourniture de la première équerre 1, de la doublure de brancard arrière 5 et de la doublure de montant de baie 2. Vient ensuite une étape de fixation, de préférence par soudage, de la première équerre 1 et de la doublure de brancard arrière 5 sur la doublure de montant de baie 2.

En cas de présence de la direction du véhicule du côté gauche, vient alors une étape de fourniture du pontet 3 de poignée avant suivie d'une étape de fixation du pontet 3 de poignée avant sur la doublure de montant de baie 2 côté droit. De préférence, cette étape de fixation du pontet 3 est réalisée en deux temps. En effet, dans un premier temps le pontet 3 est pré-positionné grâce à deux rivets et dans un deuxième temps le pontet 3 est soudé sur la doublure de montant de baie 2.

Evidemment, dans un procédé d'obtention de la structure latérale gauche, en cas de présence de la direction à gauche, il n'est pas prévu de fourniture ni de fixation d'un pontet de poignée avant. Par contre, dans un procédé d'obtention de la structure latérale gauche et en cas de direction à droite, le pontet de poignée avant est fixé sur la doublure de montant de baie côté gauche. Enfin, dans un procédé d'obtention de la structure latérale droite et en cas de direction à droite, il n'est pas prévu de fourniture ni de fixation d'un pontet de poignée avant.

En cas de caisse 30 destinée à recevoir le toit tôlé 32, alors le procédé comprend une étape de fourniture de la deuxième équerre 4 et du pontet 6 de poignée arrière. Vient ensuite une étape de fixation de la deuxième équerre 4 sur la doublure de montant de baie 2 et une étape de fixation du pontet 6 de poignée arrière sur la doublure de brancard arrière 5 et, éventuellement, sur la doublure de montant de baie 2. De préférence, cette étape de fixation est réalisée en deux temps. En effet, dans un premier temps la deuxième équerre 4 est pré-positionnée grâce à deux rivets et dans un deuxième temps la deuxième équerre 4 est soudée sur la doublure de montant de baie 2. De même, dans un premier temps le pontet 6 de poignée arrière est pré-positionné grâce à deux rivets et dans un deuxième temps le pontet 6 est soudé sur la doublure de brancard arrière 5 et, éventuellement, sur la doublure de montant de baie 2. A noter que ces pré-positionnements par le biais de rivets nécessitent des trous 16 préalables pour le passage des rivets, comme illustré sur la figure 2. Vient ensuite une étape de fourniture de la doublure de pied milieu 7, suivie d'une étape de fixation de la deuxième équerre 4 sur la doublure de pied milieu 7. De préférence, cette étape de fixation est réalisée par soudage de plusieurs épaisseurs, par exemple de soudage de l'épaisseur de la doublure de pied milieu 7 avec l'épaisseur de la deuxième équerre 4, éventuellement avec l'épaisseur de la doublure de montant de baie 2, comme illustré sur la figure 3.

Alternativement, en cas de caisse 30 de la variante destinée à recevoir le toit vitré et/ou ouvrant 33, alors le procédé comprend une étape de fourniture de la troisième équerre 11 et de la quatrième équerre 12. Vient ensuite une étape de fixation de la troisième équerre 11 sur la doublure de montant de baie 2 et une étape de fixation de la quatrième équerre 12 sur la doublure de brancard arrière 5. De préférence, cette étape de fixation est réalisée en deux temps. En effet, dans un premier temps la troisième équerre 11 est pré-positionnée grâce à deux rivets et dans un deuxième temps la troisième équerre 11 est soudée sur la doublure de montant de baie 2. De même, dans un premier temps la quatrième équerre 12 est pré-positionnée grâce à deux rivets et dans un deuxième temps la quatrième équerre 12 est soudée sur la doublure de brancard arrière 5. A noter que ces pré-positionnements par le biais de rivets nécessitent des trous préalables (non illustrés) pour le passage des rivets. Vient ensuite une étape de fourniture de la doublure de pied milieu 7 suivie d'une étape de fixation de la troisième équerre 11 sur la doublure de pied milieu 7. De préférence, cette étape de fixation est réalisée par soudage de plusieurs épaisseurs, par exemple de soudage de l'épaisseur de la doublure de pied milieu 7 avec l'épaisseur de la troisième équerre 11, éventuellement avec l'épaisseur de la doublure de montant de baie 2, comme illustré sur la figure 7.

Quel que soit le type de toit et le côté de la direction, le procédé comprend de préférence une étape de fourniture de l'anneau de renforts 34. Vient ensuite une étape de fixation de cet anneau de renforts 34 à la structure latérale 40. Cette étape de fixation est de préférence réalisée par soudage.

Le procédé comprend encore une étape de fourniture d'une peau de côté de caisse 41 illustrée notamment sur les figures 3 et 8. De préférence, la peau de côté de caisse 41 côté droit, respectivement côté gauche, comprend le montant de baie 22 côté droit, respectivement côté gauche. Vient ensuite une étape de fixation de cette peau de côté de caisse 41 à la structure latérale 40. Là encore, de préférence, cette étape de fixation est réalisée par soudage.

Dans le cas de la caisse 30 de la variante, autrement dit avec toit en verre et/ou ouvrant 33, le procédé comprend encore une étape de fourniture du support 10 destiné à participer à la fixation du toit en verre et/ou ouvrant 33. Vient ensuite une étape de fixation du support 10 sur la structure latérale 40. Là encore, de préférence, cette étape de fixation est réalisée en deux temps. En effet, dans un premier temps le support 10 est pré-positionnée grâce à deux rivets et dans un deuxième temps le support 10 est soudé sur la structure latérale 40. A noter que ces pré-positionnements par le biais de rivets nécessitent des trous préalables (non illustrés) pour le passage des rivets. Comme évoqué précédemment, de préférence le support 10 vient se fixer sur la peau de côté de caisse 41, plus précisément sur la bordure 22' du montant de baie 22.

Un mode d'exécution d'un procédé d'obtention de l'agencement 50 de la caisse 30 du véhicule automobile 20 est décrit ci-après.

Le procédé d'obtention de l'agencement 50 comprend une étape de mise en oeuvre d'un procédé d'obtention de la structure latérale 40. Vient ensuite une étape de fourniture de la traverse de pavillon avant 9, 13 et de la traverse de pavillon centrale 8, 14. Les traverses sont avantageusement simplement posées sur leurs équerres respectives ce qui les calent naturellement.

De préférence, comme illustré en particulier sur les figures 3 et 8, au moins un crochet de rétention 17 est ménagé en saillie sur chaque équerre et est destiné à venir s'insérer dans au moins un orifice 18 sur la traverse correspondante. Les crochets de rétention 17 associés aux orifices 18 permettent d'éviter un déplacement excessif des traverses selon la direction verticale. Un tel déplacement pourrait faire sortir les traverses de leurs zones d'accueil respectives, en particulier au cours de l'éventuel convoyage préalable à la fixation des traverses.

Vient ensuite une étape de fixation de la traverse de pavillon avant 9, 13 posée sur la première équerre 1. Préalablement ou à la suite de cette étape, une étape de fixation de la traverse de pavillon centrale 8, 14 posée sur la deuxième équerre 4 ou sur la quatrième équerre 12 est prévue. Avantageusement, la première équerre 1 est soudée sur la traverse de pavillon avant 9, 13. Avantageusement, la deuxième équerre 4 ou la quatrième équerre 12 est soudée sur la traverse de pavillon centrale 8, 14 correspondante.

En cas de toit vitré 33, vient ensuite une étape de fourniture de l'élément de fermeture 39 de traverse de pavillon avant 13. Vient ensuite une étape de fixation de cet élément de fermeture 39 sur la traverse de pavillon avant 13 et, de préférence sur le support 10.

En remarque, la solution selon l'invention atteint donc l'objet recherché de simplifier les assemblages entre une doublure de montant de baie et des traverses de pavillon tout en améliorant l'engagement des matières et présente les avantages suivants :
- elle est économique grâce à la standardisation de certaines pièces ;
- elle peut être adaptée à tous types de caisses de véhicules automobiles.

## Revendications

1. Agencement (50) comprenant une structure latérale (40) de véhicule, notamment de véhicule automobile (20), une traverse de pavillon avant (9 ; 13) et une traverse de pavillon centrale (8 ; 14), la traverse de pavillon avant (9 ; 13) et la traverse de pavillon centrale (8 ; 14) s'étendant transversalement ou sensiblement transversalement, la structure latérale (40) comprenant une doublure de pied milieu (7) et une doublure de montant de baie (2) d'une caisse (30) de véhicule, l'agencement (50) comprend une première équerre (1) fixée sur la doublure de montant de baie (2) et sur la traverse de pavillon avant (9 ; 13), la doublure de montant de baie (2) s'étendant au-delà d'un pied milieu (31) vers l'arrière d'une telle caisse (30) selon la direction longitudinale ou sensiblement longitudinale, **caractérisé en ce que** l'agencement (50) comprend une doublure de brancard arrière (5), notamment fixée au niveau d'une extrémité arrière (2R) de la doublure de montant de baie (2), et une quatrième équerre (12) fixée sur la doublure de brancard arrière (5) et sur la traverse de pavillon centrale (14).

2. Agencement (50) selon la revendication précédente, **caractérisé en ce que** l'agencement (50) comprend une troisième équerre (11) fixée sur la doublure de pied milieu (7) et sur la doublure de montant de baie (2), la troisième équerre (11) étant destinée à participer à la fixation d'un toit en verre et/ou d'un toit ouvrant (33).

3. Agencement (50) selon la revendication 1 ou 2, **caractérisé en ce que** l'agencement (50) comprend un support (10) destiné à participer à la fixation d'un toit en verre et/ou d'un toit ouvrant (33), notamment un support (10) intégrant une piste d'encollage.

4. Agencement (50) selon l'une des revendications précédentes, **caractérisé en ce que** l'agencement (50) comprend un pontet (6) de poignée arrière, notamment fixé sur la doublure de brancard arrière (5) par au moins un rivet et/ou soudage.

5. Agencement (50) selon l'une des revendications précédentes, **caractérisé en ce que** l'agencement (50) comprend un pontet (3) de poignée avant, notamment fixé sur la doublure de montant de baie (2) par au moins un rivet et/ou soudage.

6. Véhicule, notamment véhicule automobile (20), **caractérisé en ce qu'**il comprend au moins un agencement (50) selon l'une des revendications précédentes.

7. Procédé de réalisation d'un agencement (50) selon l'une quelconque des revendications 2 à 6,
**caractérisé en ce qu'**il comprend une étape de fourniture d'une première équerre (1) côté droit, respectivement côté gauche, d'une doublure de brancard arrière (5) côté droit, respectivement côté gauche, et d'une doublure de montant de baie (2) côté droit, respectivement côté gauche,
suivie d'une étape de fixation de la première équerre (1) et de la doublure de brancard arrière (5) sur la doublure de montant de baie (2), notamment par soudage, et,
en cas de présence d'une direction d'un tel véhicule côté gauche, respectivement côté droit, alors le procédé comprend une étape de fourniture d'un pontet (3) de poignée avant côté droit, respectivement côté gauche, suivie d'une étape de fixation du pontet (3) de poignée avant sur la doublure de montant de baie (2) côté droit, respectivement côté gauche, notamment par au moins un rivet et/ou soudage.

8. Procédé selon la revendication précédente, **caractérisé en ce qu'**il comprend une étape de fourniture d'une troisième équerre (11) et d'une quatrième équerre (12),
suivie d'une étape de fixation de la troisième équerre (11) sur la doublure de montant de baie (2) et une étape de fixation de la quatrième équerre (12) sur la doublure de brancard arrière (5).

9. Procédé selon la revendication précédente, **caractérisé en ce que** l'étape de fixation de la troisième et de la quatrième équerres (11, 12) est réalisée en deux temps, dans un premier temps la troisième et la quatrième équerre (11, 12) sont pré-positionnée grâce à deux rivets et dans un deuxième temps la troisième et la quatrième équerres (11, 12) sont respectivement soudées sur la doublure de montant de baie (2) et sur la doublure de brancard arrière (5).

## Patentansprüche

1. Anordnung (50), welche eine Seitenstruktur (40) eines Fahrzeugs, insbesondere eines Kraftfahrzeugs (20), einen vorderen Dachquerträger (9; 13) und einen mittleren Dachquerträger (8; 14) umfasst, wobei der vordere Dachquerträger (9; 13) und der mittlere Dachquerträger (8; 14) sich quer oder im Wesentlichen quer erstrecken, wobei die Seitenstruktur (40) eine Mittelsäulenverkleidung (7) und eine A-Säulenverkleidung (2) einer Fahrzeugkarosserie (30) umfasst, wobei die Anordnung (50) einen ersten Winkel (1) umfasst, der an der A-Säulenverkleidung (2) und am vorderen Dachquerträger (9; 13) befestigt ist, wobei sich die A-Säulenverkleidung (2) über eine Mittelsäule (31) hinaus zum hinteren Bereich einer solchen Karosserie (30) hin in der Längsrichtung oder im Wesentlichen in der Längsrichtung erstreckt, **dadurch gekennzeichnet, dass** die Anordnung (50) eine hintere Längsträgerverkleidung (5), die insbesondere an einem hinteren Ende (2R) der A-Säulenverkleidung (2) befestigt ist, und einen vierten Winkel (12), der an der hinteren Längsträgerverkleidung (5) und am mittleren Dachquerträger (14) befestigt ist, umfasst.

2. Anordnung (50) nach dem vorhergehenden Anspruch, **dadurch gekennzeichnet, dass** die Anordnung (50) einen dritten Winkel (11) umfasst, der an der Mittelsäulenverkleidung (7) und an der A-Säulenverkleidung (2) befestigt ist, wobei der dritte Winkel (11) dazu bestimmt ist, zur Befestigung eines Glasdaches und/oder eines öffnungsfähigen Daches (33) beizutragen.

3. Anordnung (50) nach Anspruch 1 oder 2, **dadurch gekennzeichnet, dass** die Anordnung (50) einen Träger (10) umfasst, der dazu bestimmt ist, zur Befestigung eines Glasdaches und/oder eines öffnungsfähigen Daches (33) beizutragen, insbesondere einen Träger (10), in den eine Klebebahn integriert ist.

4. Anordnung (50) nach einem der vorhergehenden Ansprüche, **dadurch gekennzeichnet, dass** die Anordnung (50) einen hinteren Griffsteg (6) umfasst, der insbesondere an der hinteren Längsträgerverkleidung (5) durch mindestens einen Niet und/oder Schweißung befestigt ist.

5. Anordnung (50) nach einem der vorhergehenden Ansprüche, **dadurch gekennzeichnet, dass** die Anordnung (50) einen vorderen Griffsteg (3) umfasst, der insbesondere an der A-Säulenverkleidung (2) durch mindestens einen Niet und/oder Schweißung befestigt ist.

6. Fahrzeug, insbesondere Kraftfahrzeug (20), **dadurch gekennzeichnet, dass** es mindestens eine Anordnung (50) nach einem der vorhergehenden Ansprüche umfasst.

7. Verfahren zur Herstellung einer Anordnung (50) nach einem der Ansprüche 2 bis 6,
**dadurch gekennzeichnet, dass** es einen Schritt der Bereitstellung eines ersten Winkels (1) der rechten Seite bzw. linken Seite, einer hinteren Längsträgerverkleidung (5) der rechten Seite bzw. linken Seite und einer der A-Säulenverkleidung (2) der rechten Seite bzw. linken Seite umfasst,
gefolgt von einem Schritt der Befestigung des ersten Winkels (1) und der hinteren Längsträgerverkleidung (5) der A-Säulenverkleidung (2), insbesondere durch Schweißen, und
dass im Falle des Vorhandenseins einer Linkslenkung bzw. Rechtslenkung eines solchen Fahrzeugs das Verfahren dann einen Schritt der Bereitstellung eines vorderen Griffstegs (3) der rechten Seite bzw. linken Seite umfasst, gefolgt von einem Schritt der Befestigung vorderen Griffstegs (3) an der A-Säulenverkleidung (2) der rechten Seite bzw. linken Seite, insbesondere durch mindestens einen Niet und/oder Schweißung.

8. Verfahren nach dem vorhergehenden Anspruch, **dadurch gekennzeichnet, dass** es einen Schritt der Bereitstellung eines dritten Winkels (11) und eines vierten Winkels (12) umfasst,
gefolgt von einem Schritt der Befestigung des dritten Winkels (11) an der A-Säulenverkleidung (2) und einem Schritt der Befestigung des vierten Winkels (12) an der hinteren Längsträgerverkleidung (5).

9. Verfahren nach dem vorhergehenden Anspruch, **dadurch gekennzeichnet, dass** der Schritt der Befestigung des dritten und des vierten Winkels (11, 12) in zwei Teilschritten durchgeführt wird, wobei in einem ersten Teilschritt der dritte und der vierte Winkel (11, 12) mithilfe von zwei Nieten vorpositioniert werden und in einem zweiten Teilschritt der dritte und der vierte Winkel (11, 12) an die A-Säulenverkleidung (2) bzw. an die hintere Längsträgerverkleidung (5) angeschweißt werden.

## Claims

1. Arrangement (50) comprising a lateral structure (40) of a vehicle, notably a motor vehicle (20), a front roof cross-member (9; 13) and a central roof cross-member (8; 14), the front roof cross-member (9; 13) and the central roof cross-member (8; 14) extending transversely or substantially transversely, the lateral structure (40) comprising a B-pillar lining (7) and an A-pillar lining (2) of a vehicle body (30), the arrangement (50) comprises a first bracket (1) fastened to the A-pillar lining (2) and to the front roof cross-member (9; 13), the A-pillar lining (2) extending beyond a B-pillar (31) towards the rear of such a body (30) in the longitudinal or substantially longitudinal direction, **characterized in that** the arrangement (50) comprises a rear side member (5), notably fastened at a rear end (2R) of the A-pillar lining (2), and a fourth bracket (12) fastened to the rear side member (5) and to the central roof cross-member (14) .

2. Arrangement (50) according to the preceding claim, **characterized in that** the arrangement (50) comprises a third bracket (11) fastened to the B-pillar lining (7) and to the A-pillar lining (2), the third bracket (11) being intended to participate in the fastening of a glass sunroof and/or of an opening sunroof (33).

3. Arrangement (50) according to Claim 1 or 2, **characterized in that** the arrangement (50) comprises a support (10) intended to participate in the fastening of a glass sunroof and/or of an opening sunroof (33), notably a support (10) incorporating a bonding surface.

4. Arrangement (50) according to one of the preceding claims, **characterized in that** the arrangement (50) comprises a rear handle connector (6), notably fastened to the rear side member (5) by at least one rivet and/or welding.

5. Arrangement (50) according to one of the preceding claims, **characterized in that** the arrangement (50) comprises a front handle connector (3), notably fastened to the A-pillar lining (2) by at least one rivet and/or welding.

6. Vehicle, notably a motor vehicle (20), **characterized in that** it comprises at least one arrangement (50) according to one of the preceding claims.

7. Method for making an arrangement (50) according to any one of Claims 2 to 6,
**characterized in that** it comprises a step of supplying a respective right- or left-side first bracket (1), a respective right- or left-side rear side member (5), and a respective right- or left-side A-pillar lining (2), followed by a step of fastening the first bracket (1) and the rear side member (5) to the A-pillar lining (2), notably by welding, and
in the case of a left- or right-hand drive vehicle respectively, then the method comprises a step of providing a respective right- or left-side front handle connector (3), followed by a step of fastening the front handle connector (3) to the respective right- or left-side A-pillar lining (2), notably using at least one rivet and/or welding.

8. Method according to the preceding claim, **characterized in that** it comprises a step of providing a third bracket (11) and a fourth bracket (12),
followed by a step of fastening the third bracket (11) to the A-pillar lining (2) and a step of fastening the fourth bracket (12) to the rear side member (5).

9. Method according to the preceding claim, **characterized in that** the step of fastening the third and fourth brackets (11, 12) is executed in two stages, in a first stage the third and fourth brackets (11, 12) are pre-positioned using two rivets, and in a second stage the third and fourth brackets (11, 12) are respectively welded to the A-pillar lining (2) and to the rear side member (5).
